# EUROPEAN PATENT APPLICATION

(11) **EP 4 789 961 A1**
(43) Date of publication of application: **12.08.2026**
(21) Application number: 26156515.4
(22) Date of filing: 05.02.2026
(51) Int. Cl.: B63B 21/00, B63B 21/50, B63B 79/30, B63B 79/00

(54) **SUBSEA ANCHOR MONITORING SYSTEM**

(30) Priority: 10.02.2025 GB 202501938
(71) Applicant: Siemens Energy AS, 0596 Oslo (NO)
(72) Inventor: EASTOE, Andrew Robert, 5427 Urangsvag (NO)
(74) Representative: Isarpatent

(57) **Abstract**

An anchor monitoring system for a marine wind turbine held in an operating position by an anchor includes a sensor assembly including a subsea housing fixedly attached to the anchor and positionable at an operating location on a seabed. A tilt sensor is positioned within the subsea housing and operates to measure an angle of the anchor. In addition, a second sensor selected from one of a pressure sensor, a temperature sensor, and a vibration sensor, and a third sensor selected from one of a pressure sensor, a temperature sensor, and a vibration sensor are positioned within the subsea housing. A controller operates to detect a change in an operating condition of the anchor in response to the receipt of a measured angle from the tilt sensor, a second measured value from the second sensor, and a third measured value from the third sensor.

## Description

### BACKGROUND

Anchoring systems for floating wind turbines maintain the stability and position of the turbine structures in offshore environments. These systems typically employ mooring lines and anchors to tether the floating platform to the seabed. The design of anchoring systems depends on several factors, including water depth, seabed composition, environmental conditions, and the type of floating platform used (such as spar, semi-submersible, or tension-leg platforms). Common anchoring methods include catenary, taut-leg, and tension-leg moorings, each with distinct configurations and load characteristics. Catenary moorings use chains or cables with significant slack, while taut-leg moorings are under tension with less slack, and tension-leg platforms use vertical tendons forming a more rigid connection. The choice of anchoring system affects the dynamic response, installation complexity, and overall cost of the floating wind turbine deployment.

### SUMMARY

In one aspect, an anchor monitoring system for a marine wind turbine held in an operating position by an anchor includes a sensor assembly including a subsea housing fixedly attached to the anchor and positionable at an operating location on a seabed. A tilt sensor is positioned within the subsea housing and operates to measure an angle of the anchor. In addition, a second sensor selected from one of a pressure sensor, a temperature sensor, and a vibration sensor, and a third sensor selected from one of a pressure sensor, a temperature sensor, and a vibration sensor are positioned within the subsea housing. A controller operates to detect a change in an operating condition of the anchor in response to the receipt of a measured angle from the tilt sensor, a second measured value from the second sensor, and a third measured value from the third sensor.

In another aspect, an anchor monitoring system includes a first anchor, a second anchor, a third anchor, and a fourth anchor each positioned on a seabed. The anchor monitoring system also includes a first wind turbine including a first anchor line coupled to the first anchor and a second anchor line coupled to the second anchor to maintain the first wind turbine in a first operating position. The anchor monitoring system also includes a second wind turbine including a third anchor line coupled to the third anchor and a fourth anchor line coupled to the fourth anchor to maintain the second wind turbine in a first operating position. The anchor monitoring system also includes a first sensor assembly coupled to the first anchor and operable to measure a first data set, a second sensor assembly coupled to the second anchor and operable to measure a second data set, a third sensor assembly coupled to the third anchor and operable to measure a third data set, and a fourth sensor assembly coupled to the fourth anchor. Each of the first sensor assembly, the second sensor assembly, the third sensor assembly, and the fourth sensor assembly includes a tilt sensor operable to measure an angle of the anchor, a second sensor selected from one of a pressure sensor, a temperature sensor, and a vibration sensor, and a third sensor selected from one of a pressure sensor, a temperature sensor, and a vibration sensor. The anchor monitoring system also includes a controller operable to detect a change in the first operating position and the second operating position in response to the receipt of the first data set, the second data set, the third data set, and the fourth data set.

In another aspect, a method of predicting a change in position for one of a first wind turbine, a second wind turbine, and a third wind turbine of a wind farm includes analyzing collected operating data to generate a digital twin of the wind farm, measuring actual angle data for each anchor attached to the first wind turbine, the second wind turbine, and the third wind turbine. The method also includes delivering the measured actual angle data to the digital twin, and operating the digital twin to predict movement of each anchor in response to the receipt of the measured actual angle data.

### BRIEF DESCRIPTION OF THE DRAWINGS

To easily identify the discussion of any particular element or act, the most significant digit or digits in a reference number refer to the figure number in which that element is first introduced.
FIG. 1 schematically illustrates an example of a wind farm including a controller and a number of turbines anchored to the seabed.
FIG. 2 schematically illustrates an example of an anchor suitable for use in the wind farm of FIG. 1.
FIG. 3 schematically illustrates an example of a sensor assembly suitable for use with the anchor of FIG. 2.
FIG. 4 schematically illustrates another example of a wind farm including a controller and a number of turbines anchored to the seabed.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

It should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms (i.e., one or more) as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, terms such as "first", "second", "third" and so forth may be used herein to refer to various elements, information, functions, or acts, but should not be considered as limiting in any way. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

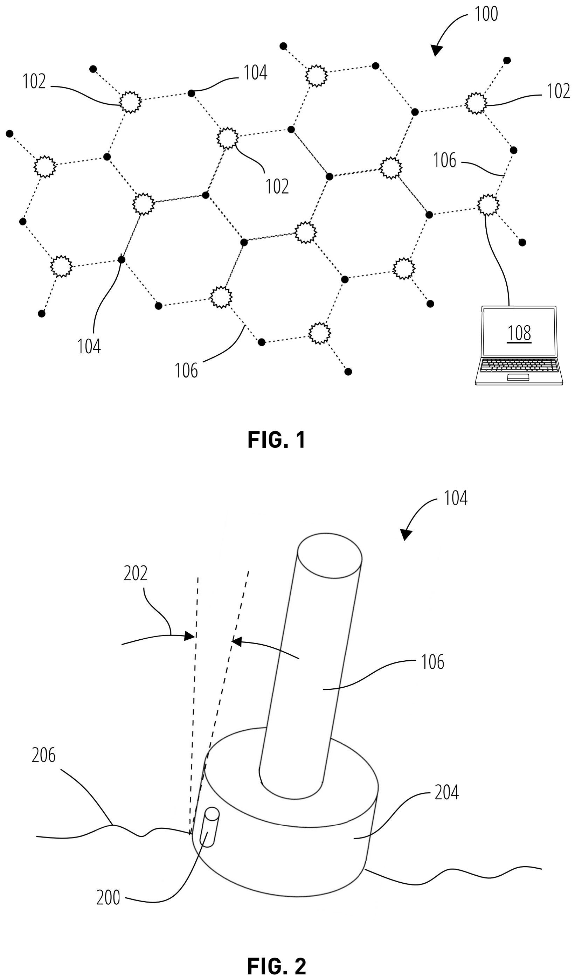

FIG. 1 schematically illustrates an example of a wind farm 100 arranged to be positioned on a large body of water such as a lake or ocean. The wind farm 100 includes a number of individual wind turbines that are spaced apart from one another in a predetermined pattern to assure efficient operation while maintaining the smallest possible footprint. A controller 108 is associated with the wind farm 100 and operates to monitor or control various aspects of the wind farm 100. Possible controllers include micro-processor based controllers, control systems, programmable logic controllers, and the like.

While some wind turbines are permanently supported on a seabed 206, others, such as those schematically illustrated in FIG. 1 are floating wind turbines 102. Floating wind turbines 102 are supported on floatation devices that maintain the wind turbine 102 above the water line. One or more anchors 104 are attached to each wind turbine 102 and engage or rest on the seabed 206. In the illustrated arrangement, two or more wind turbines 102 may be connected to the same anchor 104 with each wind turbine 102 connected to three anchors 104. Of course, more or fewer anchors 104 could be used for each wind turbine 102 and each anchor 104 could moor one wind turbine 102 or more wind turbines 102 as desired.

One or more mooring lines 106 extend between each wind turbine 102 and each anchor 104 associated with the wind turbine 102. Mooring lines 106 may include cables, chains, synthetic fiber ropes, and the like.

Several types of anchors 104 may be used to hold marine wind turbines 102 in place, each with its own advantages and suitable conditions. Examples of suitable anchors 104 include drag embedment anchors, suction pile anchors, driven pile anchors, gravity anchors, dynamically installed anchors (e.g., torpedo anchors), and vertical loaded anchors. The choice of anchor design depends on factors such as seabed conditions, loading requirements, installation costs, and environmental considerations.

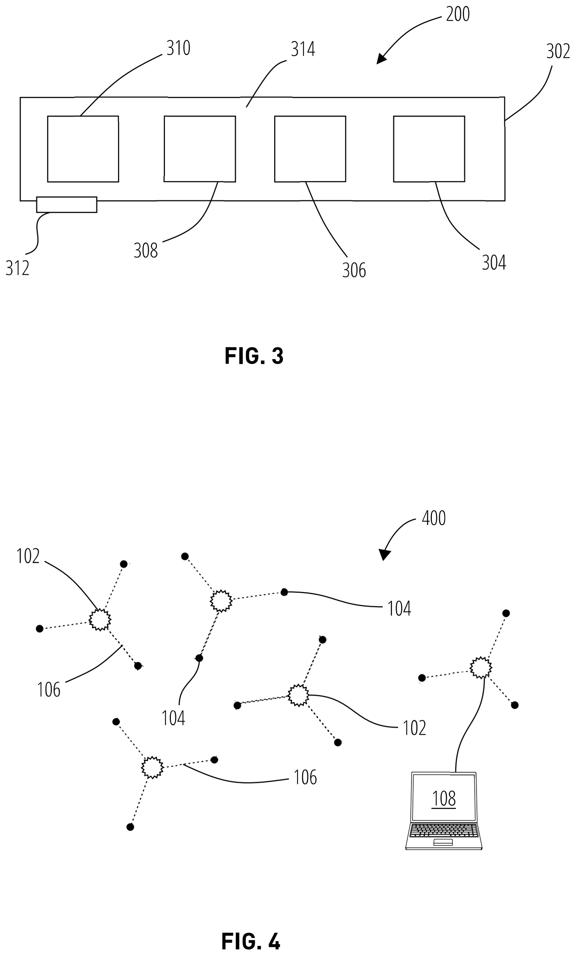

FIG. 3 schematically illustrates one example of an anchor 104 in the form of a suction anchor 104. The suction anchor 104, also known as a suction caisson, suction pile, or suction bucket, is an offshore foundation used to secure floating structures like oil platforms, wind turbines 102, and other marine installations to the seabed 206. It consists of an open-bottomed steel cylinder with a sealed top, resembling an inverted bucket 204. Suction anchors 104 work by utilizing negative pressure to embed themselves into the seabed 206. To position the anchor 104, the anchor 104 is lowered to the seabed 206, where it partially penetrates the sediment due to its own weight. Water is pumped out of the anchor's inverted bucket 204 to create a negative pressure (suction) inside the inverted bucket 204 relative to the outside water pressure. The pressure difference forces the anchor 104 deeper into the seabed 206, securing it firmly in place. Once installed, the anchor 104 can resist both lateral and axial loads, transferring forces from the wind turbine 102 to the seabed 206 through attached mooring lines 106.

A sensor assembly 200 is attached to the anchor 104 and positioned to measure several parameters associated with the anchor 104 and the environment in which the anchor 104 is installed. In the illustrated construction, the sensor assembly 200 is fixedly attached to the anchor 104 such that it can measure a tilt angle 202 or a change in the tilt angle 202 of the anchor 104.

The sensor assembly 200, schematically illustrated in Fig. 3 includes an anchor housing 302 that encloses a tilt sensor 304. In addition, the anchor housing 302 may also include additional sensors such as a pressure sensor 306, a temperature sensor 308, and a vibration sensor 310 as well as other sensors that may be desired. A communication port 312 may be provided to allow measured data to be transmitted to the controller 108 during operation. Any suitable communication port 312 and communication scheme may be employed as desired.

In preferred constructions, the anchor housing 302 provides a sealed internal space 314 for the various sensors. The internal space 314 is preferably maintained at about one atmosphere and is sealed from any moisture entry. For some sensor assemblies 200 the exterior pressure may be well in excess of the one atmosphere within the internal space 314.

FIG. 4 illustrates another wind farm 400 in which each wind turbine 102 uses its own set of anchors 104. Thus, there are no shared anchors 104. In the illustrated arrangement, each wind turbine 102 is connected to three anchors 104 via mooring lines 106. Of course, other arrangements could use fewer or more anchors 104 for each wind turbine 102.

In operation, sensor assemblies 200 are attached to each anchor 104 prior to the anchor 104 being submerged. Once each anchor 104 is positioned as desired, the tilt sensor 304 may be calibrated to the actual position of the anchor 104. Once calibrated, the tilt sensor 304 operates to measure the tilt angle 202. The tilt angle 202 may be a change in the angle from the calibrated position or may be an actual angle measured relative to vertical.

In addition, in constructions with pressure sensors 306 and temperature sensors 308 in the sensor assembly 200, the sensor assembly 200 is capable of measuring the ambient pressure and temperature around the anchor 104.

The measured data is transmitted to the controller 108 which analyses the data to determine if any changes have occurred. Changes in the tilt angle 202 may be indicative of a change in position of the wind turbine 102 relative to the anchor 104. Changes in temperature or pressure may be indicative of movement of the anchor 104 along the seabed 206 to a new or varied environment.

Similarly, the vibration sensor 310, when employed detects vibrations in or near the anchor 104 that may be indicative of unwanted movement of the anchor 104 or movement of the mooring line 106.

In addition to monitoring the various sensor assemblies 200 and the data they output, one anchor monitoring system also includes a digital twin housed within the controller 108 or within another computer system. The digital twin is a virtual representation of the wind farm 100 and may include inputs from the sensor assemblies 200, other sensors within the wind farm 100, water data related to the body of water in which the wind farm 100 is located, weather data, and the like. The digital twin uses known or historical data to build a model of the wind farm system.

Once the model is created, new data can be input into the system with the digital twin operating to predict events, occurrences, or anomalies based on the input data. In some systems, the digital twin can provide operator actions that could be taken in advance of certain occurrences to mitigate undesirable operation or damage to components or equipment.

Thus, the digital twin functions as a proxy for the current state of the wind farm 100 and uses real-time and historical data to represent the past and present and simulate predicted futures.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

Further embodiments:
1. An anchor monitoring system for a marine wind turbine held in an operating position by an anchor, the monitoring system comprising:
   a sensor assembly including a subsea housing fixedly attached to the anchor and positionable at an operating location on a seabed;
   a tilt sensor positioned within the subsea housing and operable to measure an angle of the anchor;
   a second sensor selected from one of a pressure sensor, a temperature sensor, and a vibration sensor and positioned within the subsea housing;
   a third sensor selected from one of a pressure sensor, a temperature sensor, and a vibration sensor and positioned within the subsea housing; and
   a controller operable to detect a change in an operating condition of the anchor in response to the receipt of a measured angle from the tilt sensor, a second measured value from the second sensor, and a third measured value from the third sensor.
2. The anchor monitoring system of embodiment 1, wherein the tilt sensor, the second sensor, and the third sensor are sealably enclosed within the sensor assembly and maintained at a sensor pressure that is lower than a subsea pressure at the seabed.
3. The anchor monitoring system of embodiment 1, wherein the second sensor is a temperature sensor and is operable to measure a temperature at the seabed.
4. The anchor monitoring system of embodiment 1, wherein the third sensor is a pressure sensor and is operable to measure a pressure at the seabed.
*5.* An anchor monitoring system comprising:
   a first anchor, a second anchor, a third anchor, and a fourth anchor each positioned on a seabed;
   a first wind turbine including a first anchor line coupled to the first anchor and a second anchor line coupled to the second anchor to maintain the first wind turbine in a first operating position;
   a second wind turbine including a third anchor line coupled to the third anchor and a fourth anchor line coupled to the fourth anchor to maintain the second wind turbine in a first operating position;
   a first sensor assembly coupled to the first anchor and operable to measure a first data set;
   a second sensor assembly coupled to the second anchor and operable to measure a second data set;
   a third sensor assembly coupled to the third anchor and operable to measure a third data set;
   a fourth sensor assembly coupled to the fourth anchor, each of the first sensor assembly, the second sensor assembly, the third sensor assembly, and the fourth sensor assembly including: a tilt sensor operable to measure an angle of the anchor;
   a second sensor selected from one of a pressure sensor, a temperature sensor, and a vibration sensor; and
   a third sensor selected from one of a pressure sensor, a temperature sensor, and a vibration sensor; and
   a controller operable to detect a change in the first operating position and the second operating position in response to the receipt of the first data set, the second data set, the third data set, and the fourth data set.

6. The anchor monitoring system of embodiment 5, wherein the tilt sensor, the second sensor, and the third sensor or each of the first sensor assembly, the second sensor assembly, the third sensor assembly, and the fourth sensor assembly are sealably enclosed within a respective first anchor housing, a second anchor housing, a third anchor housing, and a fourth anchor housing and are maintained at a sensor pressure that is lower than a subsea pressure at the seabed.
7. The anchor monitoring system of embodiment 5, wherein the second sensor is a temperature sensor and is operable to measure a temperature at the seabed.
8. The anchor monitoring system of embodiment 5, wherein the third sensor is a pressure sensor and is operable to measure a pressure at the seabed.
9. A method of predicting a change in position for one of a first wind turbine, a second wind turbine, and a third wind turbine of a wind farm, the method comprising:
   analyzing collected operating data to generate a digital twin of the wind farm;
   measuring actual angle data for each anchor attached to the first wind turbine, the second wind turbine, and the third wind turbine;
   delivering the measured actual angle data to the digital twin; and
   operating the digital twin to predict movement of each anchor in response to the receipt of the measured actual angle data.
10. The method of embodiment 9, further comprising measuring an ambient temperature at each anchor and identifying anchors for which a temperature change greater than a predetermined value has occurred.

## Claims

1. An anchor monitoring system for a marine wind turbine held in an operating position by an anchor, the monitoring system comprising:
a sensor assembly including a subsea housing fixedly attached to the anchor and positionable at an operating location on a seabed;
a tilt sensor positioned within the subsea housing and operable to measure an angle of the anchor;
a second sensor selected from one of a pressure sensor, a temperature sensor, and a vibration sensor and positioned within the subsea housing;
a third sensor selected from one of a pressure sensor, a temperature sensor, and a vibration sensor and positioned within the subsea housing; and
a controller operable to detect a change in an operating condition of the anchor in response to the receipt of a measured angle from the tilt sensor, a second measured value from the second sensor, and a third measured value from the third sensor.

2. The anchor monitoring system of claim 1, wherein the tilt sensor, the second sensor, and the third sensor are sealably enclosed within the sensor assembly and maintained at a sensor pressure that is lower than a subsea pressure at the seabed.

3. The anchor monitoring system according to any of the preceding claims, wherein the second sensor is a temperature sensor and is operable to measure a temperature at the seabed.

4. The anchor monitoring system according to any of the preceding claims, wherein the third sensor is a pressure sensor and is operable to measure a pressure at the seabed.

5. An anchor monitoring system, in particular anchor monitoring system according to any of the preceding claims, the anchor monitoring system comprising:
a first anchor, a second anchor, a third anchor, and a fourth anchor each positioned on a seabed;
a first wind turbine including a first anchor line coupled to the first anchor and a second anchor line coupled to the second anchor to maintain the first wind turbine in a first operating position;
a second wind turbine including a third anchor line coupled to the third anchor and a fourth anchor line coupled to the fourth anchor to maintain the second wind turbine in a first operating position;
a first sensor assembly coupled to the first anchor and operable to measure a first data set;
a second sensor assembly coupled to the second anchor and operable to measure a second data set;
a third sensor assembly coupled to the third anchor and operable to measure a third data set;
a fourth sensor assembly coupled to the fourth anchor, each of the first sensor assembly, the second sensor assembly, the third sensor assembly, and the fourth sensor assembly including:
a tilt sensor operable to measure an angle of the anchor;
a second sensor selected from one of a pressure sensor, a temperature sensor, and a vibration sensor; and
a third sensor selected from one of a pressure sensor, a temperature sensor, and a vibration sensor; and
a controller operable to detect a change in the first operating position and the second operating position in response to the receipt of the first data set, the second data set, the third data set, and the fourth data set.

6. The anchor monitoring system of claim 5, wherein the tilt sensor, the second sensor, and the third sensor or each of the first sensor assembly, the second sensor assembly, the third sensor assembly, and the fourth sensor assembly are sealably enclosed within a respective first anchor housing, a second anchor housing, a third anchor housing, and a fourth anchor housing and are maintained at a sensor pressure that is lower than a subsea pressure at the seabed.

7. The anchor monitoring system according to claim 5 or 6, wherein the second sensor is a temperature sensor and is operable to measure a temperature at the seabed.

8. The anchor monitoring system according to any of the claims 5 to 7, wherein the third sensor is a pressure sensor and is operable to measure a pressure at the seabed.

9. A method of predicting a change in position for one of a first wind turbine, a second wind turbine, and a third wind turbine of a wind farm, in particular by employing an anchor monitoring system according to any of the preceding claims, the method comprising:
analyzing collected operating data to generate a digital twin of the wind farm;
measuring actual angle data for each anchor attached to the first wind turbine, the second wind turbine, and the third wind turbine;
delivering the measured actual angle data to the digital twin; and
operating the digital twin to predict movement of each anchor in response to the receipt of the measured actual angle data.

10. The method of claim 9, further comprising measuring an ambient temperature at each anchor and identifying anchors for which a temperature change greater than a predetermined value has occurred.
